# EUROPEAN PATENT APPLICATION

(11) **EP 3 009 922 A1**
(43) Date of publication of application: **20.04.2016**
(21) Application number: 14306624.9
(22) Date of filing: 14.10.2014
(51) Int. Cl.: G06F 3/041, G06F 21/00, G06K 19/00, G06K 7/10

(54) **Communication system between a first electronic device using a light emitter and a second electronic device using a photo-sensor**

(71) Applicant: Gemalto SA, 92190 Meudon (FR)
(72) Inventor: Mallet, Chrystele, 92190 Meudon (FR); Blochet, Marc, 92190 Meudon (FR)
(74) Representative: Cassagne, Philippe M.J.

(57) **Abstract**

The present invention relates to a communication system (SYS) between a first electronic device (E1) and a second electronic device (E2), wherein said communication system (SYS) comprises:
- said first electronic device (E1) which comprises a light emitter (Le) and which is adapted to :
- emit via said light emitter (Le) a first determined light pattern (Lp1) continuously;
- receive from said second electronic device (E2) first advertisement data (Ad1) comprising an acknowledgement information (Iack);
- upon reception of said first advertisement data (Ad1), emit via said light emitter (Le) a light data frame (Ld);
- receive from said second electronic device (E2) second advertisement data (Ad2) comprising a connection approval information (Ica) said connection approval information (Ica) comprising data (Da) based on said light data frame (Ld);
- upon reception of said second advertisement data (Ad2), establish a communication link (Lk) with said second electronic device (E2);
- said second electronic device (E2) which comprises a photo-sensor (Ps) and which is adapted to :
- receive via said photo-sensor (Ps) from said first electronic device (E1) said first determined light pattern (Lp1);
- upon reception of said first determined light pattern (Lp1), emit said first advertisement data (Ad1);
- receive via said photo-sensor (Ps) from said first electronic device (E1) said light data frame (Ld);
- upon reception of said light data frame (Ld), emit said second advertisement data (Ad2).

## Description

### TECHNICAL FIELD

The present invention relates to a communication system between a first electronic device and a second electronic device. It also relates to an associated communication method.

Such communication system may be used in a non-limitative example for any communication using a light modulation to transmit data.

### BACKGROUND OF THE INVENTION

A communication system comprising a first electronic device and a second electronic device which is currently used, permit the second electronic device to transmit data to the first electronic device through a touch screen of said first electronic device. The second electronic device comprises an actuator which permits to emulate a touch and a touch release on the touch screen of said first electronic device. According to the capacitive touch state of the touch screen, an event is raised at the first electronic device. According to the time between two consecutives events, the first electronic device distinguishes different values such as a value "0" and a value "1". The sequence of the different values received forms the sequence of data to be transmitted.

One problem of this prior art is that this system is not reliable as the first electronic device may not be able to differentiate a touch from a touch release, especially when the actuator and the capacitive touch screen are not efficient.

### SUMMARY OF THE INVENTION

It is an object of the invention to provide a communication system between a first electronic device and a second electronic device, which permits an efficient and reliable communication establishment between two electronic devices.

To this end, there is provided a communication system between a first electronic device and a second electronic device, wherein said communication system comprises:
- said first electronic device which comprises a light emitter and which is adapted to :
- emit via said light emitter a first determined light pattern continuously;
- receive from said second electronic device first advertisement data comprising an acknowledgement information;
- upon reception of said first advertisement data, emit via said light emitter a light data frame;
- receive from said second electronic device second advertisement data comprising a connection approval information, said connection approval information comprising data based on said light data frame;
- upon reception of said second advertisement data, establish a communication link with said second electronic device;
- said second electronic device which comprises a photo-sensor and which is adapted to :
- receive via said photo-sensor from said first electronic device said first determined light pattern;
- upon reception of said first determined light pattern, emit said first advertisement data;
- receive via said photo-sensor from said first electronic device said light data frame;
- upon reception of said light data frame, emit said second advertisement data.

As we will see in further details, the communication establishment system which is based on a light emission instead of a touch emission for transmitting data, permits to efficiently transmit data thanks to a first stage where the second electronic device calibrates itself according to the first determined light pattern emitted by the first electronic device.

In addition, there is provided a first electronic device adapted to communicate with a second electronic device, wherein said first electronic device comprises a light emitter and is adapted to :
- emit via said light emitter a first determined light pattern continuously;
- receive from said second electronic device first advertisement data comprising an acknowledgement information;

- upon reception of said first advertisement data, emit via said light emitter a light data frame;
- receive from said second electronic device second advertisement data comprising a connection approval information, said connection approval information comprising data based on said light data frame;
- upon reception of said second advertisement data, establish a communication link with said second electronic device.

In addition, there is provided a second electronic device adapted to communicate with a first electronic device, wherein said second electronic device comprises a photo-sensor and is adapted to :
- receive via said photo-sensor from said first electronic device a first determined light pattern continuously emitted via a light emitter;
- upon reception of said first determined light pattern, emit first advertisement data comprising an acknowledgement information;
- receive via said photo-sensor from said first electronic device a light data frame emitted via said light emitter;
- upon reception of said light data frame, emit second advertisement data comprising a connection approval information, said connection approval information comprising data based on said light data frame.

According to non-limitative embodiments of the invention, the communication system, the first electronic device, the second electronic device, in accordance with the invention further comprises the following characteristics.

In a non-limitative embodiment, said first electronic device is a mobile phone, a tablet, a phablet, a pc computer, or a laptop, or a portable device equipped with a light emitted diode.

In a non-limitative embodiment, said second electronic device is a portable device.

In a non-limitative embodiment, said first and second advertisement data are emitted via Bluetooth Low Energy^{™} advertisement packets.

In a non-limitative embodiment, said communication link is a Bluetooth Low Energy^{™} communication link.

In a non-limitative embodiment, said first electronic device is further adapted to measure the signal strength of advertisement data emitted by said second electronic device.

In addition, there is provided a communication method between a first electronic device and a second electronic device, wherein said communication method comprises:
- emitting a first determined light pattern continuously by means of said first electronic device via a light emitter ;
- upon reception of said first determined light pattern by said second electronic device via a photo-sensor, emitting first advertisement data comprising an acknowledgement information by means of said second electronic device;
- upon reception of said first advertisement data, emitting a light data frame by means of said first electronic device via said light emitter;
- upon reception of said light data frame, emitting second advertisement data comprising a connection approval information by means of said second electronic device, said connection approval information comprising data based on said light data frame;
- upon reception of said second advertisement data, establishing a communication link with said second electronic device by means of said first electronic device.

### BRIEF DESCRIPTION OF THE FIGURES

Some embodiments of methods and/or apparatus in accordance with embodiments of the present invention are now described, by way of example only, and with reference to the accompanying drawings, in which:
- Fig. 1 illustrates schematically a non-limitative embodiment of the communication system between a first electronic device and a second electronic device according to the invention;
- Fig. 2 illustrates schematically the system of Fig. 1 and the functionalities of the different elements of said communication system;
- Fig.3 is a schematic organization chart of the communication method which is carried out by the communication system of Fig. 1;
- Fig.4 is a sequence diagram illustrating the communication method of Fig. 3 comprising further non-limitative steps.

### DESCRIPTION OF EMBODIMENTS OF THE INVENTION

In the following description, well-known functions or constructions by the man skilled in the art are not described in detail since they would obscure the invention in unnecessary detail.

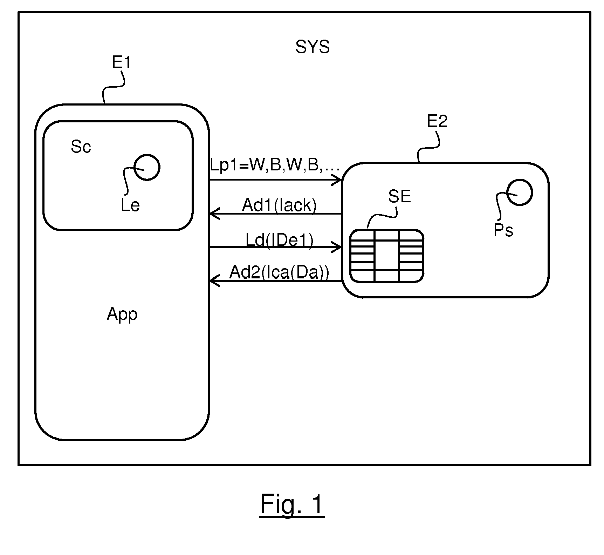

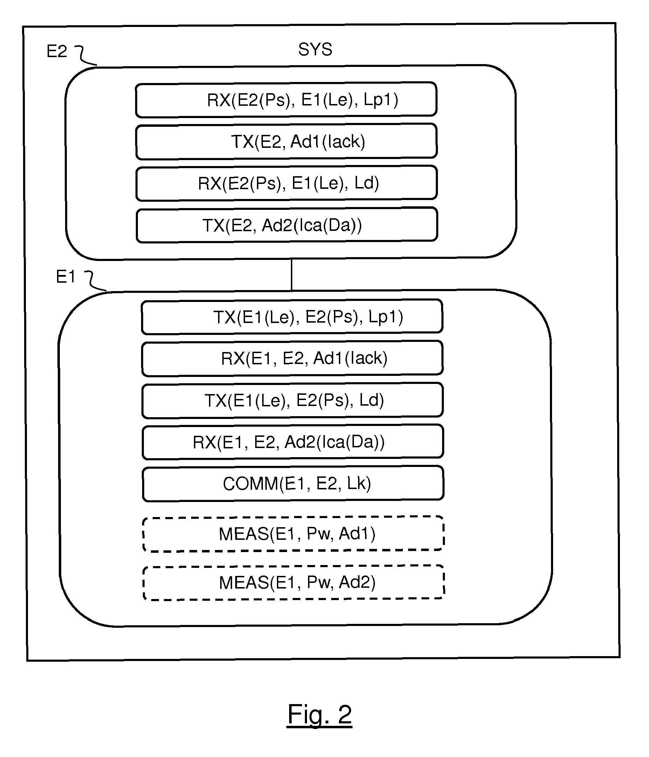

The present invention relates to a communication system SYS between a first electronic device E1 and a second electronic device E2 that aims to establish a wireless communication. Said communication system SYS is illustrated in Fig. 1 and the different functionalities of its different components are illustrated in Fig. 2.

As illustrated in Fig. 1, the system SYS comprises:
- said first electronic device E1 comprising a light emitter Le;
- said second electronic device E2 comprising a photo-sensor Ps.

In a non-limitative embodiment, the light emitter Le is a Light Emitting Diode component LED.

In a non-limitative embodiment, the first electronic device E1 further comprises a screen Sc.

In non-limitative embodiments, the first electronic device E1 is a mobile phone, a tablet, a phablet, a pc computer, or a laptop. Hence, the first electronic device E1 may be a portable device or not.

In a non-limitative embodiment, the second electronic device E2 is a portable device.

In a non-limitative embodiment, the first electronic device E1 and the second electronic device E2 are Bluetooth Low Energy^{™} (BLE) devices. It means that they may exchange data by means of a BLE communication protocol.

The first electronic device E1 and the second electronic device E2 are described in details in the following.

As will be described hereinafter, the communication system SYS permits the second electronic device E2 (receiving device) to start advertising a specific pattern to inform that it is ready to receive light data communication. It will do it only when it has synchronized its local clock with the transmission rate and correctly calibrated the light levels emitted by the first electronic device E1 (transmitter device). Thus, the transmitting device E1, emitting the light, may assume than the transmission may start.

The non-limitative example of a mobile phone for the first electronic device E1 and of the portable device for the second electronic device E2 will be taken in the following description.

### • First electronic device E1

In a non-limitative example, the mobile phone E1 comprises an application App which is an email application. Said email application App may receive encrypted emails or may send encrypted emails.

In order to decrypt/encrypt said emails, the mobile phone E1 needs the portable device E2 as said device E2 comprises the means to decrypt/encrypt the emails.

Hence, in order to communicate with said portable device E2, the mobile phone E1 is adapted to:
- emit via said light emitter Le a first determined light pattern Lp1 continuously (function illustrated in Fig. 2 TX(E1(Le), E2(Ps), Lp1));
- receive from said second electronic device E2 first advertisement data Ad1 comprising an acknowledgement information Iack (function illustrated in Fig. 2 RX(E1, E2, Ad1(Iack));
- upon reception of said first advertisement data Ad1, emit via said light emitter Le a light data frame Ld (function illustrated in Fig. 2 TX(E1(Le), E2(Ps), Ld));
- receive from said second electronic device E2 second advertisement data Ad2 comprising a connection approval information Ica, said connection approval information Ica comprising data Da based on said light data frame Ld (function illustrated in Fig. 2 RX(E1, E2, Ad2(Ica(Da)));
- upon reception of said second advertisement data Ad2, establish a communication link Lk with said second electronic device E2 (function illustrated in Fig. 2 COMM(E1, E2, Lk)).

Upon the reception of an encrypted email ee via its email application App, the emission of said first determined light pattern Lp1 is triggered.

It is to be noted that each application App of the mobile phone E1, when launched, will be able to trigger the emission of said first determined light pattern Lp1.

The determined light pattern Lp1 is used for a calibration stage (also called synchronization stage). It comprises different light levels. The mobile phone E1 modulates the light via its light emitter Le to generate different sequences of light levels.

A first light level W corresponds to a white value, and a second light level B corresponds to a black value.

In a non-limitative example, the determined light pattern Lp1 comprises a series of alternating white and black values (1p1=W-B-W-B-W etc.).

The white and black values are determined according to the intensity of the light emitted by the light emitter Le of the mobile phone E1.

The lowest intensity referred to a white value. The highest intensity referred to a black value.

Hence, this determined light pattern Lp1 is a calibration frame (also called synchronization frame) which permits the portable device E2 and the mobile phone E1 to be synchronized together for the later communication.

For performing said calibration, the portable device E2 uses transitions on that determined light pattern Lp1 to figure out the transmitter rate, and sets a local clock to the proper timing to synchronize with said transmission rate. The portable device E2 also uses this determined light pattern Lp1 to calibrate the light levels (typically the black and white levels).

It is to be noted that in order to receive such calibration frame Lp1, the portable device E2 is placed on the screen Sc of the mobile phone E1, in particular on the light emitter Le. The portable device E2 is therefore in contact with the mobile phone E1.

The mobile phone E1 is informed by the portable device E2 of the success of the calibration by means of the first advertisement data Ad1.

Hence, the mobile phone E1 stops sending the synchronization frame Lp1 when it receives the acknowledgement information Iack.

It is to be noted that while emitting said calibration frame Lp1, the mobile phone E1 is scanning all the Bluetooth Low Energy™ devices around itself (with its BLE antenna) in order to receive all the advertisement data Ad which are broadcasted over the air from these devices.

Hence, if the mobile phone E1 is surrounded by many different devices, especially by many Bluetooth Low Energy™ devices in the example described, which broadcast different advertisement data Ad, the mobile phone E1 searches for the right portable device E2 with which it wants to communicate for its specific application App, by searching for advertisement data Ad comprising an acknowledgement information Iack. Additionally, in a non-limitative embodiment, said mobile phone E1 is further adapted to measure the signal strength Pw of the first advertisement data Ad1 emitted by said portable device E2 (function illustrated in Fig. 2 in dotted lines MEAS(E1, Pw, Ad1)) if more than one advertisement data Ad comprises an acknowledgement information Iack. The mobile phone E1 will measure all the signal strength of all the advertisement data Ad received, and will choose the most powerful signal, which will be the one sent by the portable device E2 which is placed on the screen Sc. Said measure is called a RSSI ("Received Signal Strength Indicator ») measure and is well-known by the man skilled in the art.

After the calibration stage, some data through light modulation is transmitted from the mobile phone E1 to the portable device E2. Hence, the mobile phone E1 emits the light data frame Ld.

In a non-limitative embodiment, the light data frame Ld comprises an identifier IDe1 of said mobile phone E1.

Moreover, the light data frame Ld comprises a start and an end sequences. The portable device E2 is preconfigured with said start and end sequences so that it may recognize the beginning and the end of a light data frame Ld.

It is to be noted that in non-limitative embodiments, the data based on said light data frame Ld within said connection approval information Ica are either part or all the data transmitted in said light data frame Ld, or are data derived from part or all the data transmitted in said light data frame Ld.

It is to be noted that there is a certain latency between the time where the portable device E2 recognizes the light levels in the determined light pattern Lp1 and the emission of the first advertisement data Ad1, and between the time where said emission of the first advertisement data Ad1 is performed and the time where the mobile phone E1 recognizes said first advertisement data Ad1 and emits the light data frame Ld. Thus, the portable device E2 must be able to distinguish the light data frame Ld start from the determined light pattern Lp1.

The mobile phone E1 is informed by the portable device E2 that it may connect to said portable device E2 by means of the second advertisement data Ad2.

For the same purpose as the one described before, for the first advertisement data Ad1, in a non-limitative embodiment, the mobile phone searches for valid advertisement data Ad comprising connection approval information Ica. Additionally, E1 is further adapted to measure the signal strength Pw of the second advertisement data Ad2 emitted by said portable device E2 (function illustrated in Fig. 2 in dotted lines MEAS(E1, Pw, Ad2)). In a non-limitative embodiment, the communication link Lk established between the mobile phone E1 and the portable device E2 is a Bluetooth Low Energy^{™} communication link.

This permits to use a portable device E2 which is a low energy consumer contrary to when a WIFI link is used for example.

When the communication link Lk is established between both mobile phone E1 and portable device E2, the email application App may access to the portable device E2 in order to encrypt and decrypt email.. This is performed via Bluetooth Low Energy™ packets BLPck1.

### • Second electronic device E2

The second electronic device E2 calibrates itself according to the light levels W, B and to the transmission rate emitted by the first electronic device E1, as it measures the electric pulses of its photo-sensor Ps which vary according to said determined light pattern Lp1 comprising said light levels W, B. The portable device E2 is the handler of said calibration as it manages the duration of said calibration and informs itself the mobile phone E1 of the end of said calibration.

The photo-sensor Ps which permits to capture the light, provides an output which is proportional to the power P of the light that is detected. The value of said output is function of the intensity of the light received by the photo-sensor Ps.

As long as the calibration is not finished, the light data frame Ld (and therefore the secret data Ds) are not transmitted by the mobile phone E1.

Hence, in order to communicate with said mobile phone E1, the portable device E2 is adapted to:
- receive via said photo-sensor Ps from said first electronic device E1 said first determined light pattern Lp1 continuously (function illustrated in Fig. 2 RX(E2(Ps), E1(Le), Lp1));
- upon reception of said first determined light pattern Lp1, emit said first advertisement data Ad1 comprising said acknowledgement information Iack (function illustrated in Fig. 2 TX(E2, Ad1(Iack));
- receive via said photo-sensor Ps from said first electronic device E1 said light data frame Ld emitted via said light emitter Le (function illustrated in Fig. 2 RX(E2(Ps), E1(Le), Ld));
- upon reception of said light data frame Ld, emit said second advertisement data Ad2 comprising said connection approval information Ica, said connection approval information Ica comprising data Da based on said light data frame Ld (function illustrated in Fig. 2 TX(E2, Ad2(Ica(Da))).

In a non-limitative embodiment, said first and second advertisement data Ad1, Ad2 are emitted via Bluetooth Low Energy^{™} advertisement packets BLPck2.

Hence, in order to broadcast the acknowledgement information Iack and the connection approval information Ica, the portable device E2 is set up in an advertising mode MOD_AD. Any BLE electronic device such as the mobile phone E1 which is near said portable device E2 will receive said information Iack, Ica respectively in said advertisement data Ad1, Ad2.

It is to be noted that during this advertising mode MOD_AD, there is not yet any BLE connection between both devices E1, E2.

It is to be noted that in the advertising mode MOD_AD, advertisement data Ad usually comprise:
- the identification of the portable device E2;
- proprietary data of the company which manufactures said portable device E2;
- the main service offered by said portable device E2.

The acknowledgement information Iack of the first advertisement data Ad1 means that the portable device E2 has recognized the first determined light pattern Lp1 and that it has synchronized its clock with the transmission rate and calibrated the light levels. It therefore informs the mobile phone E1 that the portable device E2 is ready to receive data.

The connection approval information Ica of the second advertisement data Ad2 means that the mobile phone E1 may connect to the portable device E2, that is to say that it may establish a communication link Lk in order to transmit data.

The second advertisement data Ad2 ensure that it is the same portable device E2 that has previously received the light data frame Ld (and therefore the secret data Ds). Hence, there is a guarantee that the mobile phone E1 connects to the right portable device E2.

Without said second advertisement data Ad2, the mobile phone E1 may connect to another portable device which emits the same first advertisement data Ad1 than the portable device E2 with a stronger power emission for example (even if said another portable device is a little farther from the mobile phone E1 than the portable device E2).

If the mobile phone E1 is surrounded by many different devices, especially by many Bluetooth Low Energy^{™} devices in the example described, the portable device E2 must be easily recognized by said mobile phone E1. For this purpose, in a non-limitative embodiment, the second advertisement data Ad2 further comprises part of the data of the light data frame Ld previously received by said portable device E2.

It is to be noted that for the email application App, the portable device E2 provides through the BLE connection all the data and methods or mechanisms for E1 to perform encryption and decryption of the emails. In a non-limitative embodiment, the portable device E2 comprises a secure element SE comprising the means necessary for the encryption/decryption of the emails by the mobile phone E1.

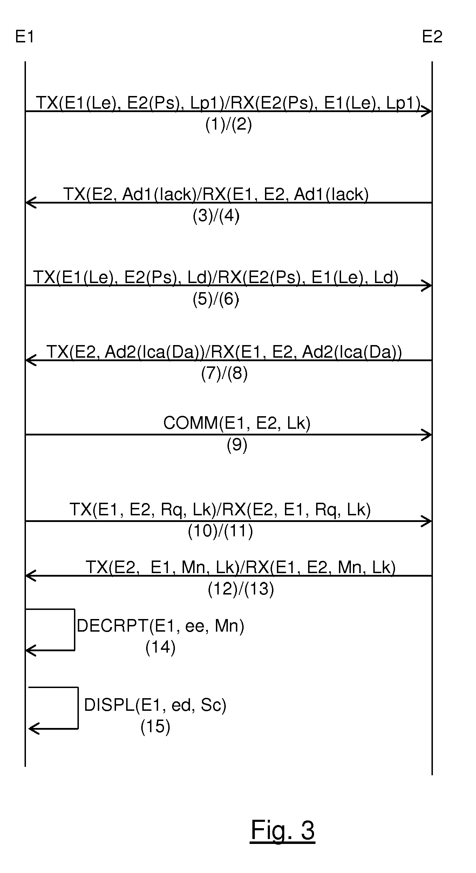

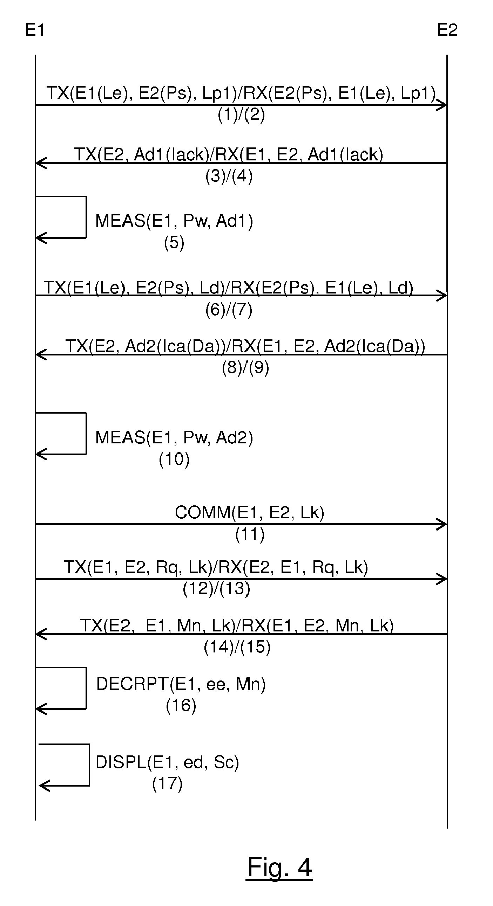

Hence, the communication system SYS described carries out a communication method MTH between a first electronic device E1 and a second electronic device E2. Said method MTH is illustrated in Fig. 3 and Fig. 4.

As above, the mobile phone E1 and the portable device E2 will be taken as non-limitative examples in the following. The email application App will be also taken as a non-limitative example.

As will be described hereinafter, when the email application App is launched, a calibration stage begins. When the calibration stage is successful, the communication stage may begin.

Hence, when the email application App received an encrypted email, as illustrated in Fig. 3, **in step 1**), the mobile phone E1 emits via said light emitter Le a first determined light pattern Lp1 continuously.

Moreover, the mobile phone E1 via its email application App requests to have a portable device E2 to be placed on its screen Sc. For this purpose, the user will see a message on his mobile phone screen Sc.

When the portable device E2 is placed on the screen Sc of the mobile phone E1, and more particularly on the area where the light emitter Le is, **in step 2**), the portable device E2 receives via its photo-sensor Ps from said first electronic device E1 said first determined light pattern Lp1 continuously.

Upon reception of said first determined light pattern Lp1 which is continuously repeated, the portable device E2 calibrates itself with the mobile phone E1. When it has recognized the first determined light pattern Lp1, the portable device E2 configures itself in the advertizing mode MOD_AD, and **in step 3**), the portable device E2 emits first advertisement data Ad1 comprising an acknowledgement information Iack.

It means that the portable device E2 differentiates the black value from the white value and has finished its calibration.

**In step 4)**, as it receives all the broadcasted information, the mobile phone E1 receives from said portable device E2 said first advertisement data Ad1 comprising an acknowledgement information Iack.

Upon receiving said first advertisement Ad1, the mobile phone E1 is aware that the calibration is finished. Hence, **in step 5**), the mobile phone E1 emits a light data frame Ld via said light emitter Le to said portable device E2.

In the example of the email application App, the light data frame Ld comprises a mobile phone identifier IDe1 and secret data Ds which include a password.

**In step 6**), the portable device E2 receives via said photo-sensor Ps from said mobile phone E1 the light data frame Ld emitted with said light emitter Le.

**In step 7**), Upon reception of the light data frame Ld, the portable device E2 emits the second advertisement data Ad2 comprising the connection approval information Ica (itself comprising data Da based on the data of the light data frame Ld).

Said data Da is in a non-limitative example the mobile phone identifier IDe1.

**In step 8**), the mobile phone E1 receives from said second electronic device E2 second advertisement data Ad2 comprising the connection approval information Ica (itself comprising data Da based on the data of the light data frame Ld).

Hence, with the light data frame Ld and with the second advertisement data Ad2 comprising data based on said light data frame Ld, said mobile phone E1 verifies that it is the right portable device E2 to communicate with.

If the mobile phone E1 is surrounded by many portable devices, it recognizes the right one.

Indeed, the mobile phone E1 compares the connection approval information Ica it has received with the light data frame Ld it has sent to see if there are the same data (or derived data).

**In step 9**), the mobile phone E1 establishes a communication link Lk with the portable device E2.

In particular, it sends some BLE packets to perform a BLE connection, using the BLE communication protocol.

The portable device E2 is then set-up in the connection mode MOD_CO.

**In step 10**), the mobile phone E1 sends a request Rq to the portable device E2 via the BLE communication link Lk (function illustrated TX(E1, E2, Rq, Lk)). Via said request, the mobile phone E1 asks the portable device E2 for the means Mn to encrypt/decrypt the emails.

**In step 11**), the portable device E2 receives said request Rq (function illustrated TX(E2, E1, Rq, Lk)), and sends the means Mn for encryption/decryption to the mobile phone E1 (function illustrated TX(E2, E1, Mn, Lk)) **in step 12**).

Upon reception of said means Mn **in step 13**) (function illustrated RX(E1, E2, Mn, Lk), **in step 14**), the mobile phone E1 decrypts the email (function illustrated DECRPT(E1, ee, Mn)) and **in step 15**) it displays said email on its screen Sc for the user to read it (function illustrated DISPL(E1, ed, Sc)).

In a non-limitative embodiment, the communication method MTH further comprises the measure of the power Pw of the first advertisement data Ad1 and of the second advertisement data Ad2 by means of the mobile phone E1 in order to distinguish between different portable devices E2 in proximity and to retain the strongest one, that is to say the one which is supposed to be the nearest which is the one place on the screen Sc.

Fig. 4 illustrates the method MTH with said non-limitative embodiment above mentioned.

Steps 1 to 4 are the same as the steps described above for Fig. 3.

**In step 5**), the mobile phone E1 measures the power Pw of the first advertisement data Ad1 and of all the other advertisement data Ad it has scanned.

It chooses the portable device E2 which advertisement data Ad1 has the most powerful RSSI signal.

**In step 6**), the mobile phone E1 emits via said light emitter Le the light data frame Ld. In the example of the email application App, the light data frame Ld comprises a mobile phone identifier IDe1.

**In step 7**), the portable device E2 receives via said photo-sensor Ps from said mobile phone E1 said light data frame Ld.

**In step 8**), Upon reception of the light data frame Ld, the portable device E2 emits second advertisement data Ad2 comprising a connection approval information Ica (itself comprising data Da based on data of said light data frame).

**In step 9**), the mobile phone E1 receives from said portable device E2 said second advertisement data Ad2 comprising said connection approval information Ica (itself comprising data Da based on data of said light data frame Ld).

It identifies the portable device E2 by means of said connection approval information data Ica.

The mobile phone E1 compares the connection approval information data Ica received and its own light data frame Ld. If they are equal, the portable device E2 is the good one.

**In step 10**), the mobile phone E1 measures the power Pw of the second advertisement data Ad2 and of all the other advertisement data Ad it has scanned.

It chooses the portable device E2 which advertisement data Ad2 has the most powerful RSSI signal.

The following steps 11 to 17 are the same than the steps 9 to 15 described for Fig. 3.

It is to be understood that the present invention is not limited to the aforementioned embodiments and variations and modifications may be made without departing from the scope of the invention. In the respect, the following remarks are made.

Hence, the first electronic device E1 may be any device (with or without a screen) comprising a component capable of light modulation.

Hence, in other non-limitative embodiments, the photo-sensor Ps is a photo-diode, a photo-transistor, a CCD ("Charged Couple Device"), a photovoltaic cell etc.

Hence, some embodiments of the invention may comprise one or a plurality of the following advantages:
- it provides a simple and reliable way to synchronize a screen communication using BLE advertising ;
- it is a reliable alternative to "touch" communication with a screen prior art;
- the duration of the synchronization process is determined by the second electronic device E2 so that no data may be transmitted if said process is not finished;
- the light data frame (and therefore the secret data) are only transmitted when one is totally sure that the second electronic device E2 is placed on the light emitter of the first electronic device E1;
- the light emitted pattern Lp1 does not convey secret information and may be displayed on the screen until the user puts the portable device on the area where the actual and possibly secret data is to be transmitted;
- there is an automatic establishment of the BLE communication without the intervention of the user. Said user doesn't have to manually chose the portable device E2 to communicate with its mobile phone for a specific application, such as the email application;
- the secret information may not be fraudulently retrieved by a third party even if the communication (BLE) is a wireless one;
- the BLE communication is more secured as:
- there is an authentication of both devices E1 and E2 thanks to the light data frame Ld (via the identifier IDe1) and the second advertisement Ad2;
- it permits to convey a light data frame as long as desired, as it is transmitted only once. It is not continuously repeated.

## Claims

1. A communication system (SYS) between a first electronic device (E1) and a second electronic device (E2), **wherein** said communication system (SYS) comprises:
- said first electronic device (E1) which comprises a light emitter (Le) and which is adapted to :
- emit via said light emitter (Le) a first determined light pattern (Lp1) continuously;
- receive from said second electronic device (E2) first advertisement data (Ad1) comprising an acknowledgement information (Iack);
- upon reception of said first advertisement data (Ad1), emit via said light emitter (Le) a light data frame (Ld);
- receive from said second electronic device (E2) second advertisement data (Ad2) comprising a connection approval information (Ica), said connection approval information (Ica) comprising data (Da) based on said light data frame (Ld);
- upon reception of said second advertisement data (Ad2), establish a communication link (Lk) with said second electronic device (E2);
- said second electronic device (E2) which comprises a photo-sensor (Ps) and which is adapted to :
- receive via said photo-sensor (Ps) from said first electronic device (E1) said first determined light pattern (Lp1);
- upon reception of said first determined light pattern (Lp1), emit said first advertisement data (Ad1);
- receive via said photo-sensor (Ps) from said first electronic device (E1) said light data frame (Ld);
- upon reception of said light data frame (Ld), emit said second advertisement data (Ad2).

2. First electronic device (E1) adapted to communicate with a second electronic device (E2), **wherein** said first electronic device (E1) comprises a light emitter (Le) and is adapted to :

3. - emit via said light emitter (Le) a first determined light pattern (Lp1) continuously;
- receive from said second electronic device (E2) first advertisement data (Ad1) comprising an acknowledgement information (Iack);
- upon reception of said first advertisement data (Ad1), emit via said light emitter (Le) a light data frame (Ld);
- receive from said second electronic device (E2) second advertisement data (Ad2) comprising a connection approval information (Ica), said connection approval information (Ica) comprising data (Da) based on said light data frame (Ld);
- upon reception of said second advertisement data (Ad2), establish a communication link (Lk) with said second electronic device (E2).

4. Second electronic device (E2) adapted to communicate with a first electronic device (E1), **wherein** said second electronic device comprises a photo-sensor (Ps) and (E2) is adapted to :

5. - receive via said photo-sensor (Ps) from said first electronic device (E1) a first determined light pattern (Lp1) continuously emitted via a light emitter (Le);
- upon reception of said first determined light pattern (Lp1), emit first advertisement data (Ad1) comprising an acknowledgement information (Iack);
- receive via said photo-sensor (Ps) from said first electronic device (E1) a light data frame (Ld) emitted via said light emitter (Le);
- upon reception of said light data frame (Ld), emit second advertisement data (Ad2) comprising a connection approval information (Ica), said connection approval information (Ica) comprising data (Da) based on said light data frame (Ld).

6. Communication system (SYS), first electronic device (E1) or second electronic device (E2) according to one of the previous claims 1 to 3, wherein said first electronic device (E1) is a mobile phone, a tablet, a phablet, a pc computer, or a laptop, or a portable device equipped with a light emitted diode (LED).

7. Communication system (SYS), first electronic device (E1) or second electronic device (E2) according to one of the previous claims 1 to 3, **wherein** said second electronic device (E2) is a portable device.

8. Communication system (SYS), first electronic device (E1) or second electronic device (E2) according to one of the previous claims 1 to 3, **wherein** said first and second advertisement data (Ad1, Ad2) are emitted via Bluetooth Low Energy^{™} advertisement packets (BLPck1).

9. Communication system (SYS)), first electronic device (E1) or second electronic device (E2) according to one of the previous claims 1 to 3, **wherein** said communication link (Lk) is a Bluetooth Low Energy^{™} communication link.

10. Communication system (SYS)), first electronic device (E1) or second electronic device (E2) according to one of the previous claims 1 to 3, **wherein** said first electronic device (E1) is further adapted to measure the signal strength (Pw) of advertisement data (Ad1, Ad2) emitted by said second electronic device (E2).

11. Communication method (MTH) between a first electronic device (E1) and a second electronic device (E2), **wherein** said communication method (MTH) comprises:
- emitting a first determined light pattern (Lp1) continuously by means of said first electronic device (E1) via a light emitter (Le) ;
- upon reception of said first determined light pattern (Lp1) by said second electronic device (E2) via a photo-sensor (Ps), emitting first advertisement data (Ad1) comprising an acknowledgement information (Iack) by means of said second electronic device (E2);
- upon reception of said first advertisement data (Ad1), emitting a light data frame (Ld) by means of said first electronic device (E1) via said light emitter (Le);
- upon reception of said light data frame(Ld), emitting second advertisement data (Ad2) comprising a connection approval information (Ica) by means of said second electronic device (E2), , said connection approval information (Ica) comprising data (Da) based on said light data frame (Ld);
- upon reception of said second advertisement data (Ad2), establishing a communication link (Lk) with said second electronic device (E2) by means of said first electronic device (E1).
